# EUROPEAN PATENT APPLICATION

(11) **EP 2 040 247 A2**
(43) Date of publication of application: **25.03.2009**
(21) Application number: 08167302.2
(22) Date of filing: 07.11.2005
(51) Int. Cl.: G09G 3/20, B60K 35/00, G01C 21/36

(54) **Display device**

(30) Priority: 06.12.2004 JP 2004352679; 01.09.2005 JP 2005253670
(62) Divisional of application: 05805938.7
(71) Applicant: Fujitsu Ten Limited, Kobe-shi, Hyogo 652-8510 (JP)
(72) Inventor: Ueta, Yoshikazu, Hyogo 652-8510 (JP); Kamoto, Mitsuhiro, Hyogo 652-8510 (JP); Fujimoto, Hiroyuki, Hyogo 652-8510 (JP); Hashimoto, Yoshiyuki, Hyogo 652-8510 (JP); Yokawa, Taku, Hyogo 652-8510 (JP)
(74) Representative: Ward, James Norman

(57) **Abstract**

A display device comprising a display unit (1001) capable of displaying separate images on the same screen in a plurality of viewing directions, a mounting place data-obtaining unit (1021) for obtaining data related to a place where the display unit (1001) is mounted, and a display control unit (1002) for controlling the display of an image in a particular viewing direction determined based on the data related to the mounting place. The display device is capable of displaying separate images on the same screen in the plurality of viewing directions, and suitably controls the display of images depending upon the place where the display device is mounted.

## Description

### Technical Field

The present invention relates to a multi-view display device which is capable of offering different information to a plurality of users independently and substantially simultaneously on a single screen. In particular, the invention relates to a display device for displaying images using equipment, mounted on a vehicle, such as a navigation device or a DVD player.

### Prior Art

In Japan, a driver is prohibited from watching a TV image or a DVD image, while driving a vehicle, from the standpoint of safety. Therefore, the presently available car-mounted display devices have been designed not to display such images as TV images or DVD images which the driver may watch while driving the vehicle. Accordingly, passengers other than the driver, such as a passenger on the front passenger's seat neighboring the driver is not allowed to watch the TV images or DVD images while the vehicle is being driven though they are not prohibited from watching the TV images or the DVD images.

Concerning the car-mounted display devices, further, various technologies have been proposed to display different contents for the driver and for the passengers other than the driver. For example, JP-A-2003-137005 discloses, as shown in Fig. 11, a display device in which a cover 1016 having light-shielding belts 1014, 1015 on both the front and back surfaces of a sheet body 1013 is disposed on the front surface side of a liquid crystal display panel 1010, and an image for the driver's seat is displayed on every other belt-like display portions 1011 of the liquid crystal display panel 1010 while an image for the front passenger's seat is displayed on belt-like display portions 1012 set among the belt-like display portions 1011. According to this display device provided with the light-shielding belts 1014 and 1015, light emitted from the belt-like display portions 1011 for displaying the image for the driver's seat falls on the eyes of the driver DR but light emitted from the belt-like display portions 1012 for displaying the image for the front passenger's seat does not fall on the eyes of the driver DR. On the other hand, light emitted from the belt-like display portions 1012 for displaying the image for the front passenger's seat falls on the passenger PA on the front passenger's seat but light emitted from the belt-like display portions 1011 for displaying the image for the driver's seat does not fall on the passenger PA on the front passenger's seat.

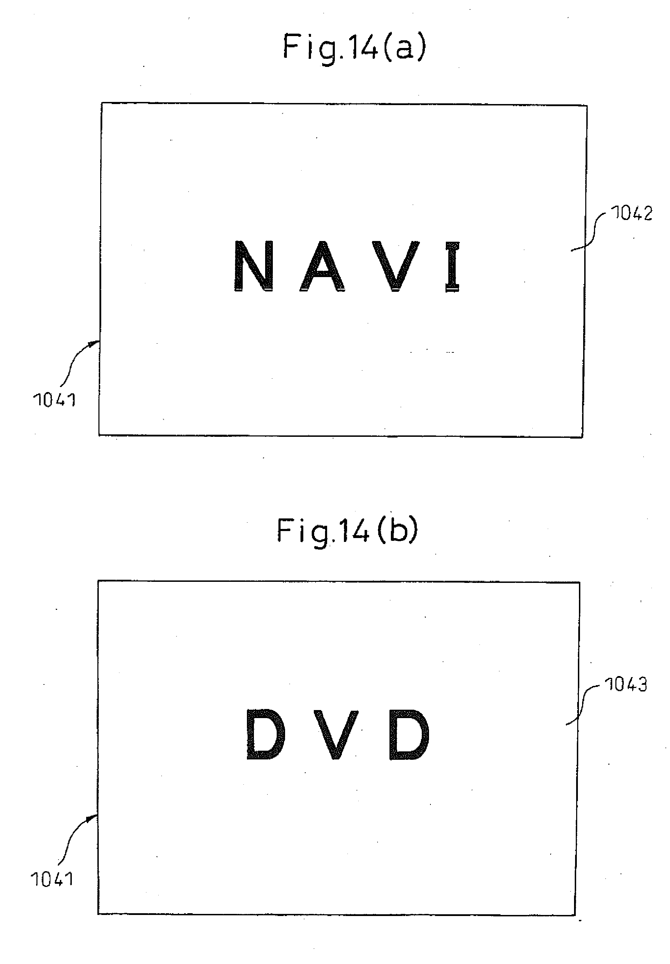

Upon employing the above display device for the car-mounted display equipment, a map image 1042 can be displayed on a display device 1041 by a navigation device so as to be seen by the driver DR but it will not be seen by the passenger PA on the front passenger's seat as shown in Fig. 14(a) while the DVD image 1043 of a DVD player can be displayed on the display device 1041 so as to be seen by the passenger PA on the front passenger's seat but it will not be seen by the driver DR. Therefore, the passenger PA on the front passenger's seat is allowed to watch the TV or a movie even when the vehicle is driving.

As other prior arts, JP-A-6-186526 and JP-A-2000-137443 disclose display devices which make it possible to simultaneously display two screens using a single liquid crystal display (LCD) enabling, for example, different screens to be seen from the driver's seat and the front passenger's seat. Further, JP-A-11-331876 and JP-A-9-46622 disclose two-screen display deices capable of displaying two kinds of images simultaneously on the same screen. Moreover, JP-A-10-123461 and JP-A-11-84131 disclose parallax barriers for separating two screens.

In Japan, as described above, the driver is prohibited from watching a DVD image or a TV image while driving the vehicle. Therefore, even when a display device is mounted on a car, which is capable of simultaneously displaying on the same screen an image for the driver's seat and an image for the front passenger's seat, it is necessary to suitably control the image for the driver's seat while the vehicle is being driven.

### Disclosure of the Invention

It is an object of the present invention to provide a display device capable of suitably controlling the display of an image depending upon the place where the display device is mounted when a display device is used which can display separate images simultaneously on the same screen in a plurality of viewing directions. Another object of the present invention is to provide a display device, for use while being mounted on a vehicle, which is capable of suitably controlling the display of an image while the vehicle is being driven, the display device being mounted on the vehicle so as to simultaneously display, on the same screen, an image in the direction of the driver's seat and an image in the direction of the front passenger's seat.

According to a first aspect of the present invention, there is provided a display device comprising a display unit capable of displaying separate images on the same screen in a plurality of viewing directions; a mounting place data-obtaining unit for obtaining data related to a place where the display unit is mounted; and a display control unit for controlling the display of an image in a particular viewing direction determined based on the data related to the mounting place.

When the data related to the mounting place are for a front seat of the vehicle, the display control unit controls the display of image in the direction of the driver's seat.

When the data related to the mounting place are for a rear seat of the vehicle, the display control unit does not control the display of separate images in the plurality of viewing directions.

According to a second aspect of the present invention, there is provided a display device comprising a display unit capable of displaying separate images on the same screen in a plurality of viewing directions; a driving detector unit for detecting the driving of a vehicle; and a display control unit for controlling the display of image in the direction of the driver's seat when the driving of the vehicle is detected by the driving detector unit.

The display device further comprises an image-judging unit for judging the content of image displayed in the direction of the driver's seat, wherein, when the driving of the vehicle is detected by the driving detector unit, the display control unit changes the image that is controlled from being displayed in the direction of the driver's seat while the vehicle is being driven over to an image that is allowed to be displayed in the direction of the driver's seat while the vehicle is being driven depending upon the result judged by the image-judging unit.

In the display device, the image that is controlled from being displayed in the direction of the driver's seat while the vehicle is being driven is at least a DVD image or a TV image.

The display device further comprises an image selection unit capable of selecting an image to be displayed in the direction of the driver's seat out of the images that are allowed to be displayed in the direction of the driver's seat while the vehicle is being driven, wherein the display control unit displays an image selected by the image selection unit as an image to be displayed in the direction of the driver's seat.

In the display device, when the driving of the vehicle is detected by the driving detector unit, the display control unit displays an image for input operation in the direction of the front passenger's seat.

The display device according to a third aspect of the present invention comprises a display unit capable of displaying, on the same screen, separate images in a plurality of viewing directions, and a to-be-controlled object-changing unit for changing the image that is to be controlled while driving depending upon the position of the driver's seat in the vehicle on which the display unit is mounted.

The display unit further comprises a driver's seat data-obtaining unit for obtaining the data related to the position of the driver's seat in the vehicle on which the display unit is mounted, and a display control unit which judges whether the driver's seat is on the right side or on the left side based upon the data obtained by the driver's seat data-obtaining unit, and controls the display of image in the direction of the driver's seat.

In the display device, the image that is to be controlled while driving is at least a DVD image or a TV image.

The display device further comprises a table that is so constituted in advance that the data of the kind of the vehicle are related to the driver's seat data, wherein the driver's seat data-obtaining unit obtains the data of the kind of the vehicle from another car-mounted electronic equipment through a car-mounted LAN and obtains the driver's seat data by making reference to the table according to the obtained data of the kind of the vehicle.

The display device of the invention has a switch for mechanically setting the data related to a place where the display device is mounted. Further, the switch is provided on the back surface of a housing of the display device.

According to the device of the above first aspect, the display control unit controls the display of image in a particular viewing direction based upon the data related to the place where the display device is mounted obtained by the mounting place data-obtaining unit. This makes it possible to suitably control the display depending on the condition of mounting the display device.

For example, when the display device is mounted on the vehicle, it is necessary to limit the display of image in the direction of the driver's seat by taking into consideration safety while the vehicle is being driven. In this case, if it is detected that the vehicle is being driven while the image (image to be controlled from being displayed) is being displayed though it is the image that is to be controlled from being displayed in the direction of the driver's seat while the vehicle is being driven, then the image is displayed, the image being the one that is allowed to be displayed in the direction of the driver's seat while the vehicle is being driven. It is, thus, made possible to correctly judge the image that is to be controlled while the vehicle is being driven, i.e., to correctly judge if the image is the one for the driver's seat to thereby control the display.

Further, when the mounting place data are those for the rear seat, the display control unit does not control the display of separate images in a plurality of viewing direction. Therefore, the images can be freely enjoyed at the rear seat.

According to the display device of the second aspect, when it is detected that the vehicle is driving, a controlled image is displayed in the direction of the driver's seat eliminating a possibility that the driver has his attention caught by the image displayed in the direction of the driver's seat and neglects safety. It is therefore made possible to realize the display of images giving attention to the safety while the vehicle is being driven.

When the vehicle is driving, further, the image in the direction of the drivers seat is changed from the image (e.g., DVD image or TV image) that is controlled from being displayed in the direction of the driver's seat over to an image that is allowed to be displayed, and the image can be freely enjoyed at the driver's seat when the vehicle is halted. When the vehicle is driving, the driver is prevented from watching the image. Thus, the display of an image is realized by taking into consideration comfort and safety.

Upon selecting an image to be displayed in the direction of the driver's seat during the driving out of the images that are allowed to be displayed, an image is displayed giving more comfort for the driver. Further, if the vehicle starts driving while the driver is selecting the input by having the image for input operation displayed in the direction of the driver's seat when the vehicle is halting, the display of the image for input operation is switched over to the direction of the front passenger's seat. Therefore, the input operation can be finished without being interrupted at the front passenger's seat. Accordingly, the driver is allowed to dedicate himself or herself to the driving while realizing the display of images, and giving more attention to safety.

According to the display device of the above third aspect of the invention, the image to be controlled while driving can be changed depending upon the position of the driver's seat in the vehicle, i.e., depending upon whether the vehicle has a steering wheel on the right side or on the left side. Therefore, the display device can be mounted on the vehicle irrespective of whether it has the steering wheel on the right side or on the left side. In this case, the image to be controlled while driving can be suitably set depending upon the position of the driver's seat in the vehicle after the display device has been mounted on the vehicle.

Further, a table combining the data of the kind of the vehicle and the driver's seat data is stored in the display device in advance, and reference is made to the table based on the data of the kind of the vehicle obtained through the car-mounted LAN to automatically execute the control when driving. This prevents erroneous control when driving or incorrect control when driving.

Further, upon mechanically setting the mounting place data to the display device in advance by using a dip switch, the user does not have to set, by himself, the control while driving, and the user finds it easy to use the display device. Further, with the dip switch being provided at a position such as on the back surface of the housing of the display device where it cannot be easily operated from the outer side once the display device is mounted on the vehicle, it is possible to prevent unauthorized control when driving.

### Brief Description of the Drawings:

The above object and features of the present invention will be more apparent from the following description of some preferred embodiments with reference to the accompanying drawings, wherein:
Fig. 1 is a diagram schematically illustrating a display device according to the present invention;
Fig. 2 is a perspective view illustrating an example of mounting the display device;
Fig. 3 is a schematic view illustrating the structure of a display unit 7 in cross section;
Fig. 4 is a schematic view illustrating the structure of a liquid crystal display panel 100 as viewed from the front;
Fig. 5 is a circuit diagram schematically illustrating a TFT substrate 104;
Fig. 6 is a block diagram schematically illustrating the display device according to the present invention;
Fig. 7 is a block diagram schematically illustrating an image output unit 211;
Fig. 8 is a block diagram schematically illustrating a control unit 200;
Fig. 9 is a block diagram schematically illustrating a memory 218;
Fig. 10 is a block diagram schematically illustrating the constitution of the display device for mounting on the vehicle according to a first embodiment of the present invention;
Fig. 11 is a view schematically illustrating the constitution of a display unit 1001;
Fig. 12 is a flowchart for illustrating the content of processing in a CPU 1021 in a display control unit 1002;
Fig. 13 is a flowchart for illustrating the content of processing of when an image is displayed by the CPU 1021;
Fig. 14(a) is a diagram schematically illustrating the display of an image;
Fig. 14(b) is a diagram schematically illustrating the display of another image;
Fig. 15(a) is a diagram schematically illustrating the shifts of a screen according to the while-driving control when the driver's seat is on the right side;
Fig. 15(b) is a diagram schematically illustrating the shifts of the screen according to the while-driving control when the driver's seat is on the left side;
Fig. 16(a) is a diagram schematically illustrating another example of shifts of the screen according to the while-driving control when the driver's seat is on the right side;
Fig. 16(b) is a diagram schematically illustrating another example of shifts of the screen according to the while-driving control when the driver's seat is on the left side;
Fig. 17 is a flowchart for initially setting the driver's seat data;
Fig. 18(a) is a view of an operation screen at the time of initial setting and, particularly, a caution screen;
Fig. 18(b) is a view of an operation screen at the time of initial setting and, particularly, a screen for setting the driver' seat;
Fig. 19 is a flowchart for changing the setting of the driver's seat data;
Fig. 20(a) is a view of an operation screen for changing the setting and, particularly, a screen for setting;
Fig. 20(b) is a view of an operation screen for changing the setting and, particularly, a caution screen;
Fig. 20(c) is a view of an operation screen for changing the setting and, particularly, a screen for setting the driver's seat;
Fig. 21(a) is a front perspective view of the display device;
Fig. 21(b) is a back view of the display device;
Fig. 21(c) is a view showing, on an enlarged scale, a portion of Fig. 21(b) for illustrating the constitution of the dip switch;
Fig. 22 is a diagram showing a driver's seat data table; and
Fig. 23 is a diagram illustrating the constitution of a car-mounted LAN.

### Embodiments

Embodiments of the invention will now be described with reference to the drawings. However, it should be noted that the technical scope of the present invention is not limited by the embodiments only but also encompasses the inventions recited in claims and even equivalents thereof.

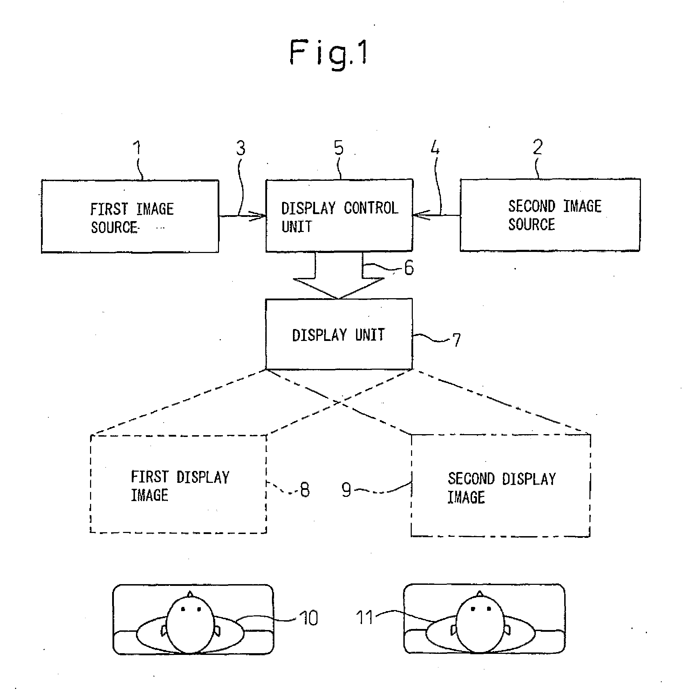

Fig. 1 is a diagram schematically illustrating a display device according to the present invention. In the drawing, reference numeral 1 denotes a first image source, 2 denotes a second image source, 3 denotes a first image data from the first image source, 4 denotes a second image data from the second image source, 5 denotes a display control unit, 6 denotes a display data, 7 denotes a display unit (e.g., liquid crystal display panel or the like), 8 denotes a first display picture based on the first image data 3 from the first image source 1, reference numeral 9 denotes a second display image based on the second image data 4 from the second image source 2, reference numeral 10 denotes an observer (user) positioned on the left side of the display unit 7, and reference numeral 11 denotes an observer (user) positioned on the right side of the display unit 7.

In the schematic diagram of Fig. 1, the observer 10 is allowed to watch the first display image 8 while the observer 11 is allowed to view the second display image 9 substantially simultaneously depending upon the positions of the observers 10 and 11 relative to the display unit 7 or, in other words, depending upon their visual field angles relative to the display unit 7. Besides, the display images 8 and 9 can be watched over the whole display surface of the display unit 7. In Fig. 1, the first image source 1 is, for example, a DVD player or a TV receiver. The first image data includes a movie image or a received image which is outputted from the DVD player or the TV receiver. The second image source 2 is, for example, a car navigation device. The second image data includes a map or a route guide image which is outputted from the car navigation device. The first image data 3 and the second image data 4 thereof are fed to the display control unit 5 in which they are so processed as can be displayed on the display unit 7 substantially simultaneously.

The display unit 7 fed with the display data from the display control unit 5 is constituted by a liquid crystal display panel or the like equipped with a parallax barrier that will be described later. A half of the total pixels of the display unit 7 in the transverse direction is used for displaying the first display image 8 based on the first image source 1, and another half of the pixels is used for displaying the second display image 9 based on the second image source 2. Only those pixels corresponding to the first display image 8 can be seen by the observer 10 on the left side of the display unit 7, but the second display image 9 substantially cannot be seen interrupted by the parallax barrier formed on the surface of the display unit 7. On the other hand, only those pixels corresponding to the second display image 9 can be seen by the observer 11 on the right side of the display unit 7, but the first display image 8 substantially cannot be seen because it is interrupted by the parallax barrier.

A single screen of the above constitution makes it possible to offer different kinds of information and contents to the users on the right and left sides. If the first image source 1 is the same as the second image source 2, the users on the right and left sides can share the same image in a customary manner, as a matter of course.

As described above, attention should be given to the fact that the display device according to the present invention has only one screen for displaying a plurality of images; i.e., a plurality of images (two kinds of images in Fig. 1) which can be independently adjusted for their image qualities are simultaneously displayed on one screen.

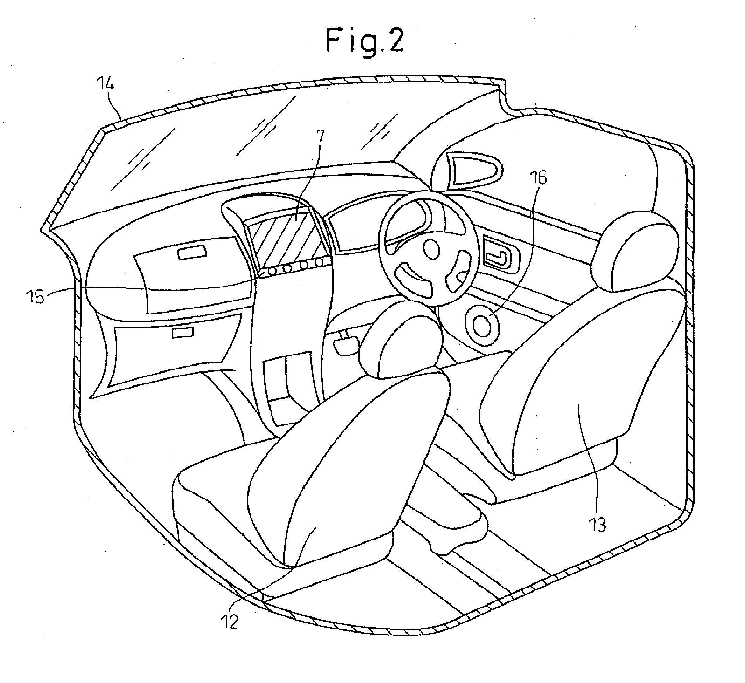

Fig. 2 is a perspective view illustrating an example of mounting the multi-view display device of the present invention on a vehicle, wherein reference numeral 12 denotes a front passenger's seat, 13 denotes a driver's seat, 14 denotes a windshield, 15 denotes an operating unit and 16 denotes speakers.

Referring, for example, to Fig. 2, the display unit 7 of the multi-view display device of Fig. 1 is arranged in a dashboard portion nearly at the center between the driver's seat 13 and the front passenger's seat 12. A variety of operations for the multi-view display device are executed by using a touch panel (not shown) or an operating unit 15 integrally formed on the surface of the display unit 7, or by using an infrared-ray or radio remote controller (not shown). Speakers 16 are arranged in the doors of the vehicle to produce sounds and alarm sounds which are related to the display images.

The observer 11 of Fig. 1 sits in the driver's seat 13, and the observer 10 sits in the front passenger's seat 12. The image on the display unit 7 that can be seen from the first viewing direction (from the side of the driver's seat) is, for example, an image of a map or the like of a car navigation device, and an image that can be seen from a second viewing direction (from the side of the front passenger's seat) substantially simultaneously is, for example, a TV received image or a movie image of DVD. Therefore, the passenger on the front passenger's seat 12 can enjoy watching the TV or DVD while the driver on the driver's seat 13 is assisted for his driving by the car navigation device. Besides, each image is displayed over the whole screen of, for example, 7 inches. Unlike the conventional multi-window display, therefore, the image size does not become small. Namely, the driver and the passenger are furnished with information and contents, which are best suited for them, as if there are provided independent and dedicated displays.

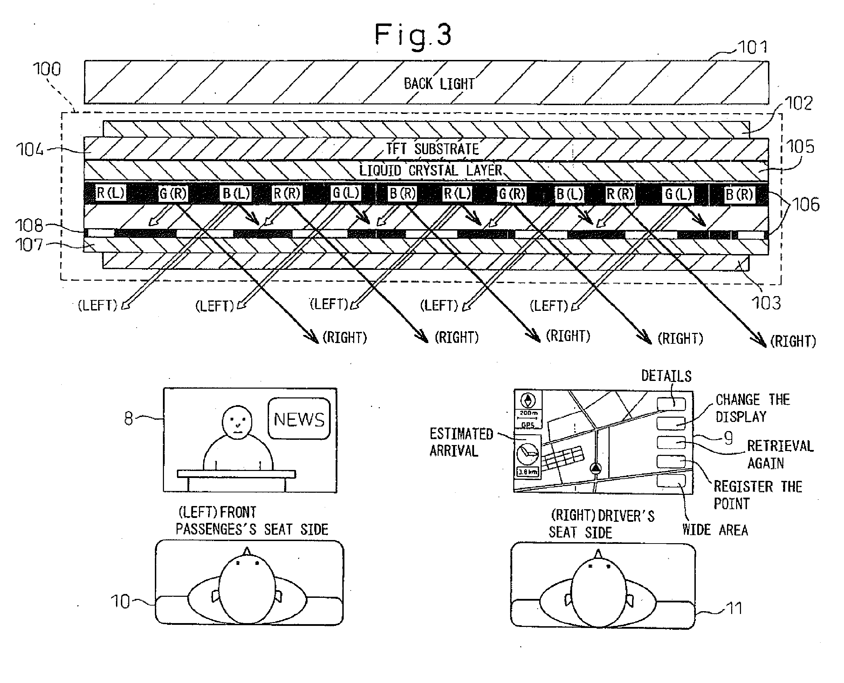

Fig. 3 is a schematic view illustrating the structure of the display unit 7 in cross section, wherein reference numeral 100 denotes a liquid crystal display panel, 101 denotes a back light, 102 denotes a polarizing plate installed on the liquid crystal display panel on the side of the back light, 103 denotes a polarizing plate arranged on the front surface of the liquid crystal display panel in the light-emitting direction, 104 denotes a TFT (thin film transistor) substrate, 105 denotes a liquid crystal layer, 106 denotes color filter substrates, 107 denotes a glass substrate, and 108 denotes a parallax barrier. The liquid crystal display panel 100 is constituted by a pair of substrates holding the liquid crystal layer 105 between the TFT substrate 104 and the color filter substrates 106 arranged facing thereto, and the parallax barrier 108 and the glass substrate 107 which are arranged on the front surface in the light-emitting direction sandwiched between the two pieces of polarizing plates 102 and 103. The liquid crystal display panel 100 is arranged being slightly separated away from the back light 101. Thus, by virtue of the above constitution, the liquid crystal display panel 100 can have pixels of RGB colors (three primary colors).

The pixels of the liquid crystal display panel 100 are divided into those for display on the left side (front passenger's seat side) and for display on the right side (driver's seat side), and are controlled for display. The pixels for display on the left side (front passenger's seat side) are prevented by the parallax barrier 108 from offering display to the right side (driver's seat side), and can be seen only from the left side (front passenger's seat side). On the other hand, the pixels for display on the right side (driver's seat side) are prevented by the parallax barrier 108 from offering display to the left side (front passenger's seat side), and can be seen only from the right side (driver's seat side). Thus, different displays can be offered to the driver and to the passenger. That is, the driver is furnished with map information of navigation while the passenger can watch a movie of DVD. Upon changing the parallax barrier 108 and the constitution of pixels of the liquid crystal display panel, further, it becomes possible to fabricate a constitution that displays different images in a plurality of directions such as in three directions. Further, the parallax barrier itself may be constituted by using a liquid crystal shutter that can be electrically driven to vary the visual field angle.

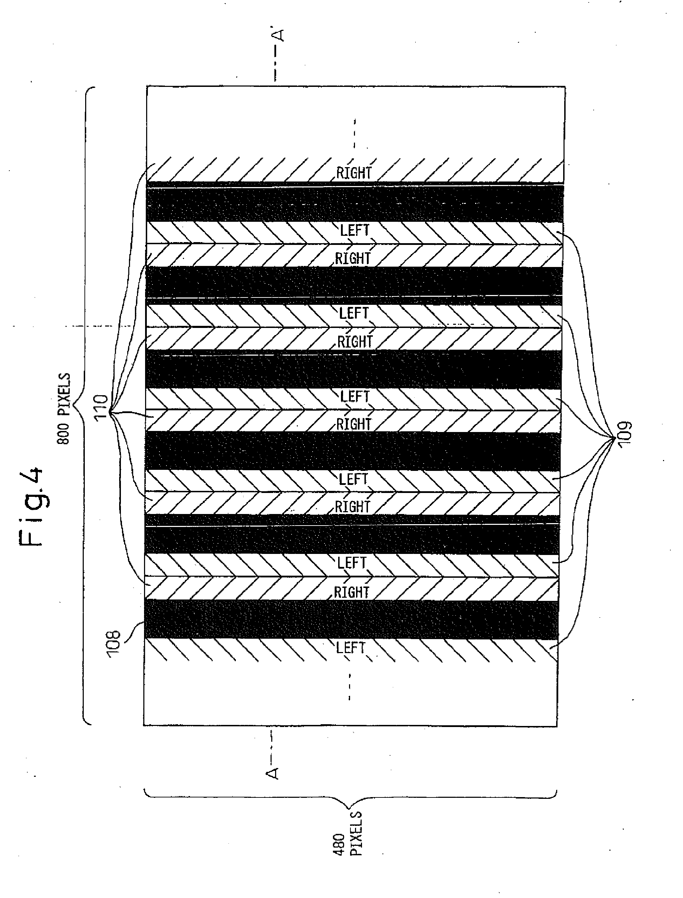

Fig. 4 is a schematic view illustrating the structure of the liquid crystal display panel as viewed from the front, and Fig. 3 is a sectional view along A-A of Fig. 4. In Fig. 4, reference numeral 109 denotes pixels for display on the left side (front passenger's seat side), and 110 denotes pixels for display on the right side (driver's seat side). Figs. 3 and 4 illustrate a portion of the liquid crystal display panel 100 in which 800 pixels are arranged in the transverse direction and 480 pixels are arranged in the longitudinal direction. The pixels 109 for display on the left side (front passenger's seat side) and the pixels 110 for display on the right side (driver's seat side) are grouped in the longitudinal direction, and are alternately arranged. The parallax barriers 108 are arranged maintaining a distance in the transverse direction and remain uniform in the longitudinal direction. Therefore, if the display panel is viewed from the left side, the parallax barriers 108 conceal the pixels 110 for the right side, and the pixels 109 for the left side can be seen. Similarly, if viewed from the right side, the parallax barriers 108 conceal the pixels 109 for the left side, and the pixels 110 for the right side can be seen. Near the surface, further, both the pixels 109 for the left side and the pixels 110 for the right side can be seen and, hence, the display image on the left side and the display image on the right side can be seen being substantially overlapped one upon the other. Here, the pixels 109 for the left side and the pixels 110 for the right side alternately arranged in Fig. 4 have colors RGB as shown in Fig. 3. However, each group may be constituted by a single color in the longitudinal direction like column R, column G or column B, or may be constituted as a column of a mixture of RGB.

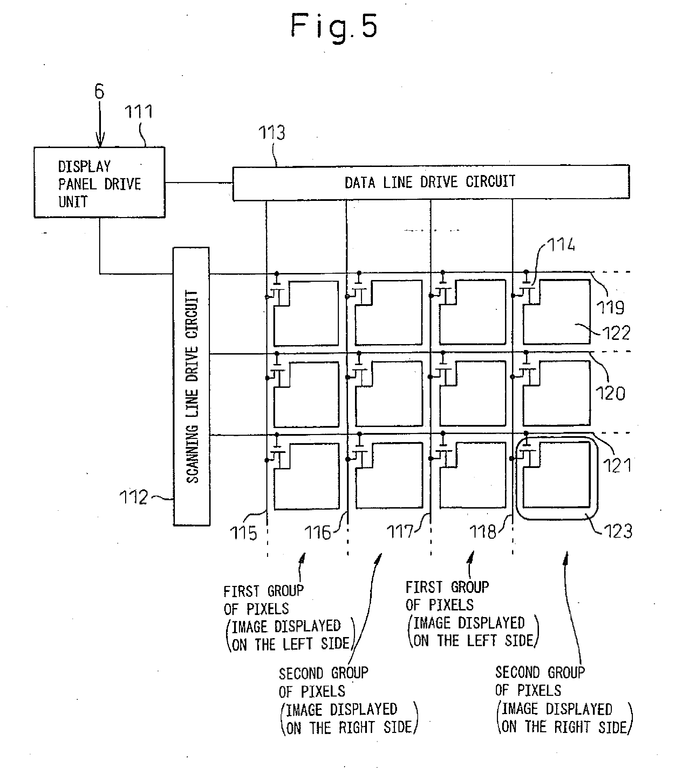

Fig. 5 is a circuit diagram schematically illustrating the TFT substrate 104, and wherein reference numeral 111 denotes a display panel drive unit, 112 denotes a scanning line drive circuit, 113 denotes a data line drive circuit, 114 denotes TFT elements, 115 to 118 denote data lines, 119 to 121 denote scanning lines, 122 denotes pixel electrodes, and 123 denotes sub-pixels.

Referring to Fig. 5, the sub-pixels 123 are formed in a plural number with each region surrounded by the data lines 115 to 118 and by the scanning lines 119 to 121 as a unit. Each sub-pixel includes a pixel electrode 122 for applying a voltage to the liquid crystal layer 105 and a TFT element 114 for switch-controlling the pixel electrode 122. The display panel drive unit 111 controls the timings for driving the scanning line drive circuit 112 and the data line drive circuit 113. The scanning line drive circuit 112 selectively scans the TFT elements 114, and the data line drive circuit 113 controls the voltage applied to the pixel electrodes 122.

Based on the synthetic data of the first picture data and the second image data or based on the first and second image data, the plurality of sub-pixels transmit the first pixel data (for displaying an image on the left side) to the data lines 115 and 117, and transmit the second pixel data (for displaying an image on the right side) to the data lines 116 and 118, to thereby form a first group of pixels for displaying the first image and a second group of pixels for displaying the second image.

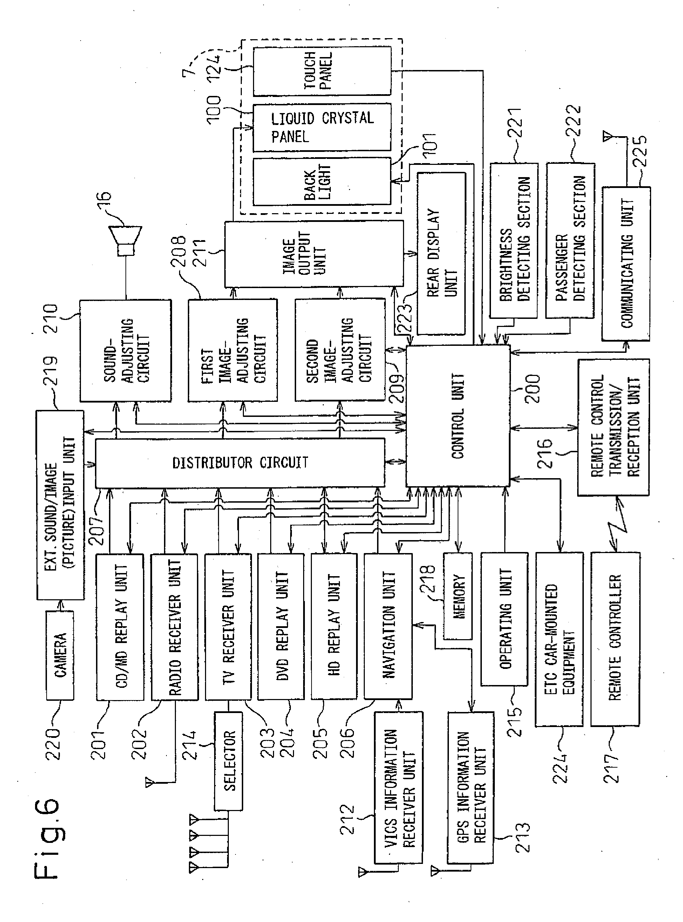

Fig. 6 is a block diagram schematically illustrating the display device according to the present invention which is applied to a so-called AVN (audio visual navigation) composite device. In Fig. 6, reference numeral 124 denotes a touch panel, 200 denotes a control unit, 201 denotes a CD/MD replay unit, 202 denotes a radio receiver unit, 203 denotes a TV receiver unit, 204 denotes a DVD replay unit, 205 denotes a hard disk (HD) replay unit, 206 denotes a navigation unit, 207 denotes a distributor circuit, 208 denotes a first image-adjusting circuit, 209 denotes a second image-adjusting circuit, 210 denotes a sound-adjusting circuit, 211 denotes an image output unit, 212 denotes a VICS information receiver unit, 213 denotes a GPS information receiver unit, 214 denotes a selector, 215 denotes an operating unit, 216 denotes a remote control transmission/reception unit, 217 denotes a remote controller, 218 denotes a memory, 219 denotes an external sound/image (picture) input unit, 220 denotes a camera, 221 denotes a brightness detecting unit, 222 denotes a passenger detecting unit, 223 denotes a rear display unit, 224 denotes an ETC car-mounted equipment, and 225 denotes a communicating unit.

The display unit 7 is constituted by the touch panel 124, liquid crystal display panel 100 and back light 101. As described above, the liquid crystal display panel 100 of the display unit 7 is capable of substantially simultaneously displaying an image which is seen from the first viewing direction or from the side of the driver's seat and an image which is seen from the second viewing direction or from the side of the front passenger's seat. As the display unit 7, there can be used a flat panel display other than the liquid crystal display panel, such as an organic EL display panel, a plasma display panel, or a cold-cathode flat panel display.

The image data and the sound data from various sources (CD/MD replay unit 201, radio receiver unit 202, TV receiver unit 203, DVD replay unit 204, HD replay unit 205 and navigation unit 206) are distributed, via the distributor circuit 207, to the first image-adjusting circuit 208 when they are the image data of the image source specified to be for the left side and to the second image-adjusting circuit 209 when they are the image data of the image source specified to be for the right side, i.e., the image data are distributed to the first image-adjusting circuit 208 and to the second image-adjusting circuit 209, and the sound data are distributed to the sound-adjusting circuit 210. The first and second image-adjusting circuits 208 and 209 adjust the brightness of the image, color tone and contrast, and the thus adjusted images are displayed on the display unit 7 through the image output unit 211. The sound-adjusting circuit 210 adjusts the distribution, sound volume and tone quality to each of the speakers, and the adjusted sound is output from the speakers 16.

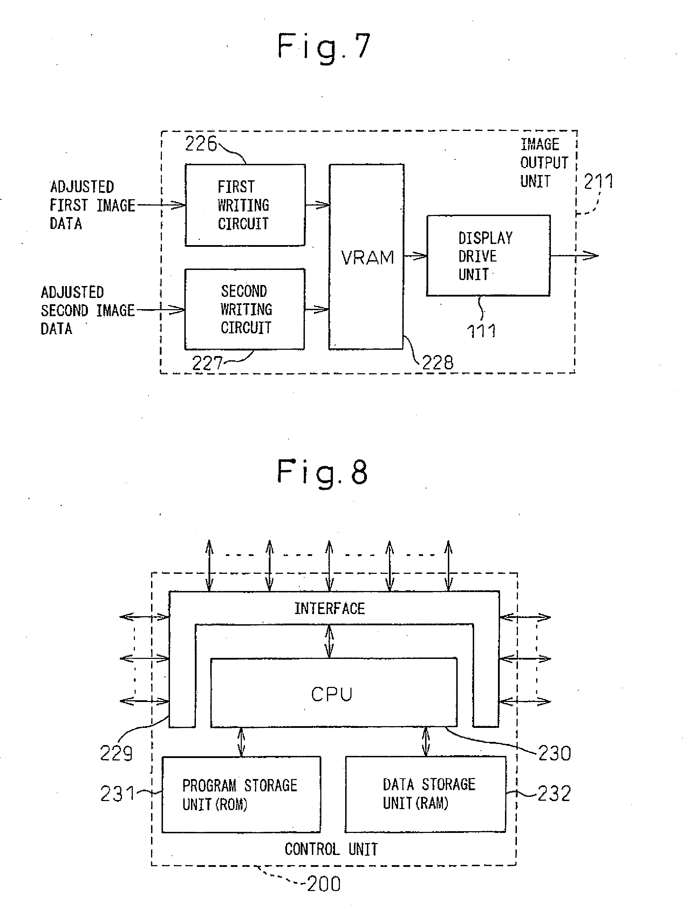

Fig. 7 is a block diagram schematically illustrating the image output unit 211, wherein reference numeral 226 denotes a first writing circuit, 227 denotes a second writing circuit, and 228 denotes a VRAM (video random access memory: frame buffer-only RAM of graphics display).

As shown in, for example, Fig. 7, the image output unit 211 includes the first writing circuit 226, second writing circuit 227, VRAM (video RAM) 228 and display drive unit 111. For example, the first writing circuit 226 writes, into the corresponding region in the VRAM 228, the image data corresponding to the columns of odd numbers (i.e., image data for the first display image 8 in Fig. 1) among the image data adjusted by the first image-adjusting circuit 208, and the second writing circuit 227 writes, into the corresponding region in the VRAM 228, the image data corresponding to the columns of even numbers (i.e., image data for the first display image 9 in Fig. 1) among the image data adjusted by the second image-adjusting circuit 209. The display drive unit 111 is a circuit for driving the liquid crystal display panel 100, and drives the corresponding pixels in the liquid crystal display panel 100 based on the image data (synthetic data of the first image data and the second image data) held in the VRAM 228. Into the VRAM 228 are written the image data obtained by synthesizing the first image data and the second image data so as to be corresponded to the image for multi-view display. Therefore, only one drive circuit may be employed, and its operation is the same as the operation of a drive circuit in an ordinary liquid crystal display device. As another constitution, further, there can be contrived to use a first display panel drive circuit and a second display panel drive circuit for driving the corresponding pixels in the liquid crystal display panel based on the respective image data without synthesizing the first image data and the second image data together.

Various sources shown in Fig. 6 will now be described. When the HD replay unit 205 is selected, music data such as MP 3 file, image data such as JPEG file, that are stored in the hard disk (HD), and menu display and image data for selecting the music data and the image data that are to be replayed, can be displayed on the display unit 7.

The navigation unit 206 includes a map data information unit storing map information used for the navigation, obtains information from the VICS information receiver unit 212 and the GPS information receiver unit 213, forms an image for navigation operation, and outputs it. The TV receiver unit 203 receives, from the antenna, analog TV broadcast waves and digital TV broadcast waves through the selector 214, and outputs the image included therein.

Further, the image (picture) from, for example, the camera 220 for monitoring the rear view connected to the external sound/image(picture) input unit 219 may be displayed on the display unit 7. In addition to the camera 220 for monitoring the rear view, a video camera and a game machine or the like may be connected to the external sound/image(picture) input unit 219.

Fig. 8 is a block diagram schematically illustrating the control unit 200, wherein reference numeral 229 denotes an interface, 230 denotes a CPU, 231 denotes a storage unit, and 232 denotes a data storage unit.

The control unit 200 controls the distributor circuit 207 and various sources, and has the two selected sources or one selected source displayed. The control unit 200 further displays, on the display unit 7, an operation menu for controlling various sources. Here, as shown in Fig. 8, the control unit 200 is constituted by a microprocessor or the like and includes the CPU 230 which generally controls various unit and circuits in the display device via the interface 229. The CPU 230 is provided with a program storage unit 231 comprising a ROM (read-only memory) for storing various programs necessary for operating the display device and a data storage unit 232 comprising a RAM (random access memory) for holding various data. The ROM and RAM may be those incorporated in the CPU or those provided on the out side thereof. Further, the ROM may be an electrically rewritable nonvolatile memory such as a flash memory.

The user may operate the above-mentioned various sources by using a touch panel 124 attached to the surface of the display unit 7, by using the switches provided in the periphery of the display unit 7, or by effecting the input operation or selection operation such as sound recognition through an operating unit 215. Alternatively, the input or selection operation may be executed by using the remote controller 217 via the remote control transmission/reception unit 216. The control unit 200 executes the control operation inclusive of the control various sources according to the operation through the touch panel 14 and the operating unit 215. Further, the control unit 200 controls the sound volumes of the speakers 16 provided in a plural number in the vehicle as shown in Fig. 2 by using the sound-adjusting circuit 210. The control unit 200 further works to store various setpoint data such as the image quality setpoint data, program and vehicle data in the memory 218.

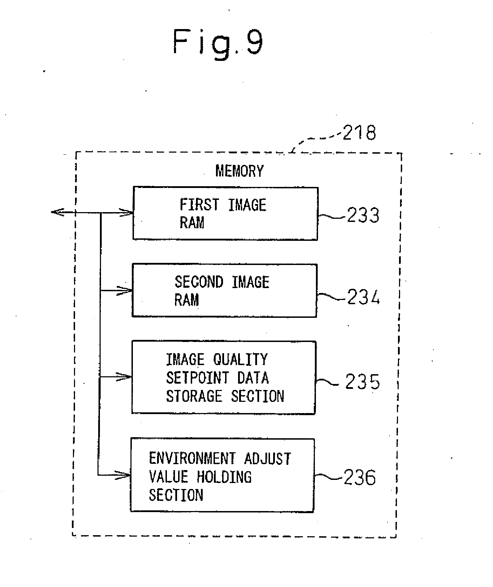

Fig. 9 is a block diagram schematically illustrating the memory 218, wherein reference numeral 233 denotes a first image RAM, 234 denotes a second image RAM, 235 denotes an image quality setpoint data storage section, and 236 denotes a environment adjustment value holding section.

As shown in, for example, Fig. 9, the memory 218 includes the first image RAM 233 and the second image RAM 234 into which can be written adjust values of image qualities of the first image and the second image set by the user. To adjust the image qualities of the first image and the second image, there is further provided the image quality setpoint data storage section 235 storing image quality adjust values of a plurality of steps as preset values for adjusting image qualities that can be read out. There is further provided the environment adjust value holding section 236 holding adjust values for adjusting the qualities of the first image and the second image for the surrounding environment in order to adjust the image quality in response to a change in the surrounding environment such as a change in the brightness on the outside of the vehicle. Here, the image quality setpoint data storage section 235 and the environment adjust value holding section 236 are constituted by electrically rewritable nonvolatile memories such as flash memories or volatile memories backed up with a battery.

The control unit 200 may vary the position of the sound based on the data detected by the brightness detecting unit 221 (e.g., light switch or optical sensor of the vehicle) or detected by the passenger detecting unit 222 (e.g., pressure sensors provided in the driver's seat and in the front passenger's seat).

Reference numeral 223 denotes the rear display unit provided for the rear seat of the vehicle, and displays the same image as the one displayed on the display unit 7, or displays either the image for the driver's seat or the image for the front passenger's seat through the image output unit 211.

The control unit 200 displays the fees from the ETC car-mounted equipment 250. The control unit 200 may further control the communicating unit 225 that wirelessly connects to a cell phone to display information related thereto.

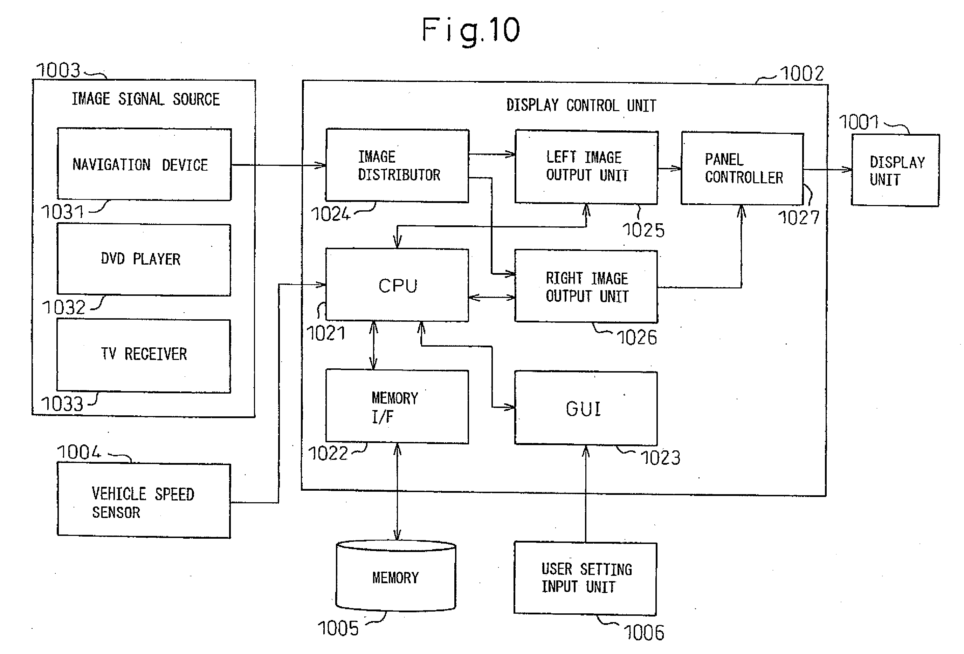

Next, another embodiment of the invention will be described with reference to Figs. 10 to 23. Fig. 10 is a block diagram schematically illustrating the constitution of the display device for mounting on the vehicle according to the embodiment of the present invention. The display device for mounting on the vehicle comprises a display unit 1001, a display control unit 1002, an image signal source 1003, a vehicle speed sensor 1004, a memory 1005, and a user setting input unit 1006. The display device for mounting on the vehicle displays not only images based on image signals from the image signal source 1003 but also images for inputting the operation of the electronic equipment (inclusive of image signal source 1003) mounted on the vehicle.

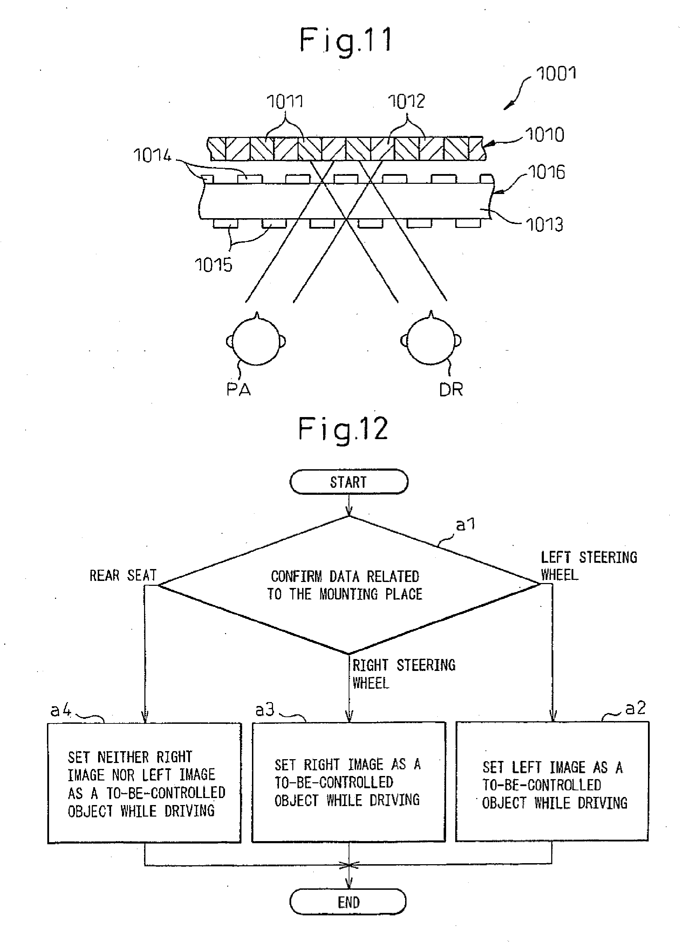

Relying upon the constitution shown, for example, in Fig. 11, the display unit 1001 is capable of displaying the image for the driver's seat in the direction of the driver's seat or the image for the front passenger's seat in the direction of the front passenger's seat. The display unit 1001 corresponds to a display device.

The display control unit 1002 which is display control means comprises a CPU (central processing unit) 1021, a memory I/F (interface) 1022, a GUI (graphic user interface) 1023, an image distributor 1024, a left image output unit 1025, a right image output unit 1026, and a panel controller 1027. The CPU 1021 controls the operation of the display control unit 1002 as a whole based on the data input from the user setting input unit 1006 through the GUI 1023, a control program and preset data read from the memory 1005 through the memory I/F 1022, and vehicle speed data input from the vehicle speed sensor 1004.

The image distributor 1024 distributes one or a plurality of image signals from the image signal source 1003 to the left image output unit 1025 and to the right image output unit 1026. Based upon the control signals from the CPU 1021, the left image output unit 1025 forms left image signals that are to be fed to the belt-like display portions 1012 for displaying a left image on the liquid crystal display panel 1010 and outputs them to the panel controller 1027. Likewise, based upon the control signals from the CPU 1021, the right image output unit 1026 forms right image signals that are to be fed to the belt-like display portions 1011 for displaying a right image on the liquid crystal display panel 1010 and outputs them to the panel controller 1027. Based on the left image signals fed from the left image output unit 1025, the panel controller 1027 has the belt-like display portions 1012 of the liquid crystal display panel 1010 display the left image. Based on the right image signals fed from the right image output unit 1026, further, the panel controller 1027 has the belt-like display portions 1011 display the right image.

The image signal source 1003 includes image output equipment of which the main function is to produce images that are to be seen by the passengers. The image output equipment may be a navigation device 1031, a DVD player 1032 or a TV receiver 1033. The image signal source 1003 further includes equipment which produces images for inputting the operation, though its principal function is not to produce the images like the audio player. The vehicle speed sensor 1004, detects the driving speed of the vehicle and sends it to the CPU 1021. The vehicle speed sensor 1004 and the CPU 1021 correspond to driving detector means.

The memory 1005 is constituted by a ROM, a RAM, a hard disk and an EPROM (electrically programmable ROM). The EPROM records the mounting place data as the data to be initially set to the display device which is mounted on the vehicle. The mounting place data are the data related to the mounting place where the display unit 1001 is mounted or the position of the steering wheel. The mounting position data are input and set by the user at the time of mounting the display device on the vehicle. The data are input and set by using the user setting input unit 1006. The memory 1005 corresponds to mounting position data storage means.

The user setting input unit 1006 is realized by using, for example, a transparent touch panel, and is arranged on the front surface side of the display unit 1001 or, precisely, on the front surface side of the cover 1016 shown in Fig. 11. The CPU 1021 has the display unit 1001 display the operation switch as an image for inputting the operation. If the user depresses a region corresponding to the operation switch on the touch panel in this state, the CPU 1021 makes sure that the operation switch is depressed, and outputs the operation instruction signal corresponding to the depressed operation switch to the equipment.

The left image output unit 1025 and the right image output unit 1026 produce not only image signals that are converted into a form suited for being displayed on the display unit 1001 from the image signals given by the image signal source 1003 but also produce image signals corresponding to the images that can be displayed without being controlled while the vehicle is being driven. Images that are allowed to be displayed are the images which will not be watched by the driver, i.e., still images and dynamic images of which the changes can be foreseen to some extent. On the other hand, images to be controlled from being displayed while the vehicle is being driven are the images which might be watched by the driver, such as dynamic images like DVD images produced by the DVD player 1032 and TV images produced by the TV receiver 1033, as well as images, that shift frequently, from the navigation device 1031 and images for inputting complex operations that require scroll operation.

Fig. 12 is a flowchart for illustrating the content of processing in the CPU 1021 in the display control unit 1002. The processing starts if, for example, the driver turns the ignition switch on. At step al, the content of mounting place data stored in the EPROM of memory 1005 is confirmed. When the mounting place data are the steering wheel position data representing that the steering wheel is on the left side, the CPU 1021 at step a2 controls the left image while the vehicle is being driven and regards the image as the image for the driver's seat.

Further, when the mounting place data are the steering wheel position data representing that the steering wheel is on the right side, the CPU 1021 at step a3 controls the right image while the vehicle is being driven and regards the image as the image for the driver's seat.

Further, when the mounting place data are the data representing that the display device (precisely, display unit 1001) for mounting on the vehicle is mounted on the rear seat, the CPU 1021 at step a4 controls neither the left image nor the right image while the vehicle is being driven and so regards that the images are not for the driver's seat. That is, the images are continuously displayed even when it is detected that the vehicle is driving while the images to be controlled from being displayed are displayed on both the left side and the right side or on either side.

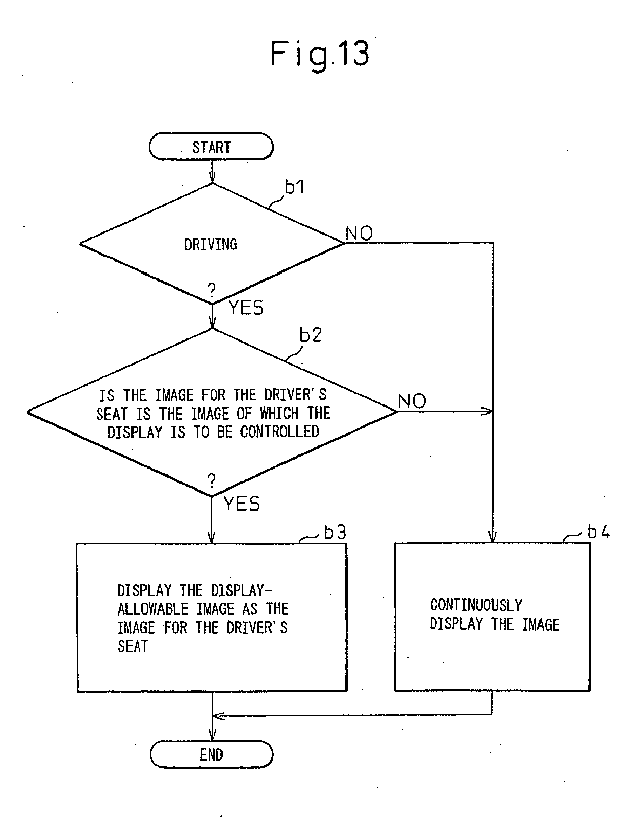

Fig. 13 is a flowchart for illustrating the content of processing of when an image is displayed by the CPU 1021. This processing is executed while the images are being displayed for the driver's seat. That is, at step a2 or a3 of Fig. 12, the left image or the right image is controlled while the vehicle is being driven and is regarded to be the image for the driver's seat; i.e., the image for the driver's seat is displayed on the display unit 1001.

At step b1, it is judged based on a sensor signal from the vehicle speed sensor 1004 if the vehicle is driving. If it is judged that the vehicle is driving, the routine proceeds to step b2 where it is judged if the image for the driver's seat is the image that is to be controlled from being displayed. If it is judged that the image for the driver's seat is the one that is to be controlled from being displayed, the routine proceeds to step b3 where the image that is allowed to be displayed is displayed as the image for the driver's seat.

The images that are allowed to be displayed are the images that will not be watched by the driver, such as still images or the dynamic images of which the changes can be foreseen.to some extent. The images that are allowed to be displayed are, for example, the following images.

As predetermined still images, there can be used an initial screen of an audio player, a so-called blue-back screen of a blue color only, a black screen of a black color only realized by, for example, discontinuing the output of an image, or a captured image of a dynamic image that had been displayed just before the driving of the vehicle was detected. As the dynamic images of which the change can be foreseen to some extent, further, there can be used a screen of the navigation device 1031 displaying the position of the vehicle while it is driving and a simply repeating dynamic image such as a screen savor of a personal computer.

If it is judged at step b1 that the vehicle is not driving or if it is judged that the image for the driver's seat is not an image that is to be controlled, the routine proceeds to step b4 to continue the present state of displaying the image.
(1) According to the above embodiment, the mounting place data are stored in the EPROM of the memory 1005, and it is judged if the right image and the left image displayed on the display unit 1001 be controlled while the vehicle is being driven, i.e., if the image is the one for the driver's seat based on the mounting place data that are stored. This makes it possible to suitably control the image for the driver's seat depending upon the position on where the display unit 1001 is mounted. For example, when the steering wheel position data are stored as the mounting position data, the right image is controlled while the vehicle is being driven provided the steering wheel is on the right side and is regarded to be the image for the driver's seat. When the steering wheel is on the left side, the left image is controlled while the vehicle is being driven and is regarded to be the image for the driver's seat. Thus, the image for the driver's seat is suitably controlled while the vehicle is being driven. Further, when the mounting place data are the data representing that the display unit 1001 is mounted on the rear seat, neither the right image nor the left image are controlled, and the images are regarded to be those which are not for the driver's seat. Therefore, the images to be displayed are not controlled even when the vehicle is driving. By making reference to the mounting place data as described above, it is possible to suitably control the display of images for the driver's seat depending upon the position on where the display unit 1001 is mounted.
(2) According to the above embodiment, when it is detected that the vehicle is driving while the display unit 1001 is displaying the controlled image as the image for the driver's seat, the image that is allowed to be displayed is displayed on the display unit 1001 as the image for the driver's seat. This prevents the driver from watching the image for the driver's seat and realizes the display of images giving attention to the safety when driving the vehicle.
   The above embodiment may be varied in a manner as described below.
(3) The image to be displayed as the image for the driver's seat while the vehicle is being driven may be selected by the driver out of a plurality of kinds of display-allowable images. The image is selected by using the user setting input unit 1006 which is the image selection device. In this case, when it is detected that the vehicle is driving, the display-allowable image as selected by the driver is displayed as the image for the driver's seat. Therefore, the above image for the driver's seat can be used as the display-allowable image that meets the driver's liking while the vehicle is being driven instead of displaying the controlled image.
(4) When it is detected that the vehicle is driving while the image for input operation is being displayed as the image for the driver's seat, a display-allowable image may be displayed as the image for the driver's seat and the image for input operation may be displayed as the image for the front passenger's seat. In this case, if the driver starts the vehicle while he or she is conducting the input operation by having the image for input operation displayed as the image for the driver's seat, the display-allowable image is displayed as the image for the driver's seat and the image for input operation is displayed as the image for the front passenger's seat. Therefore, in case the input operation by the driver is interrupted by the start of the vehicle, the subsequent input operation can be executed by a passenger on the front passenger's seat. Accordingly, the input operation is not interrupted but is reliably and completely executed.
(5) When it is detected that the vehicle is driving while the image for input operation is being displayed as the image for the driver's seat, the control operation for displaying the image for input operation as the image for the front passenger's seat may be executed to cover images for all input operations or to cover images for particular input operations. For example, the image for input operation that requires a complex operation such as scrolling operation may be displayed for the front passenger's seat while the image for input operation that requires a simple operation such as the input operation which completes upon depressing the switch only once, may not be displayed for the front passenger's seat.
(6) The fact that the vehicle is driving may be judged relying upon, for example, that a parking brake signal (PKB signal) is turned off, that the motion of the vehicle is detected by a GPS (global positioning system) signal, or that vibration is detected due to the detected result of a gyroscope incorporated in the navigation device 1031.
(7) When it is detected that the vehicle is driving, the control operation for displaying the display-allowable image as the image for the driver's seat, may be executed not only when the controlled image is displayed as the image for the driver's seat but also irrespective of the state of displaying the image for the driver's seat. For example, when it is detected that the vehicle is driving while no image is being displayed for the driver's seat, the display-allowable image may be displayed. Further, when it is detected that the vehicle is driving while the display-allowable image is being displayed as the image for the driver's seat, the image to be displayed may be switched to another display-allowable image.
(8) When it is detected that the vehicle is driving, the control operation for displaying the image for input operation as the image for the front passenger's seat, may be executed not only when the image for input operation is displayed as the image for the driver's seat but also irrespective of the state of displaying the image for the driver's seat. For example, when it is detected that the vehicle is driving while no image is being displayed for the driver's seat or while a controlled image or a display-allowable image is displayed for the driver's seat, the image for input operation may be displayed as the image for the front passenger's seat.
(9) Though the above embodiment has illustrated the case of the display device for mounting on the vehicle, the display device can be used being mounted on various places not limited to inside the compartment of a vehicle.

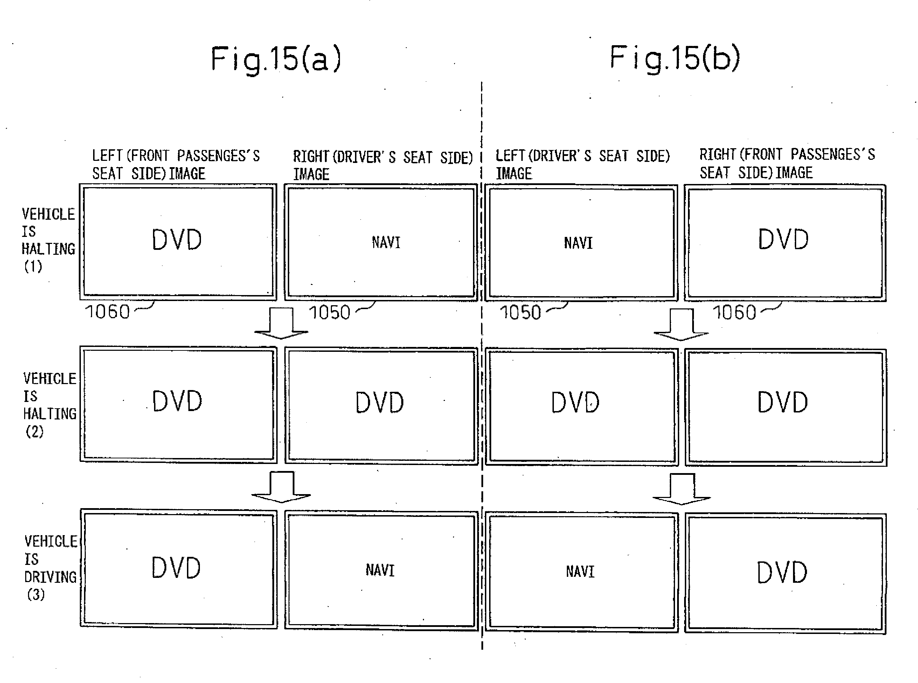

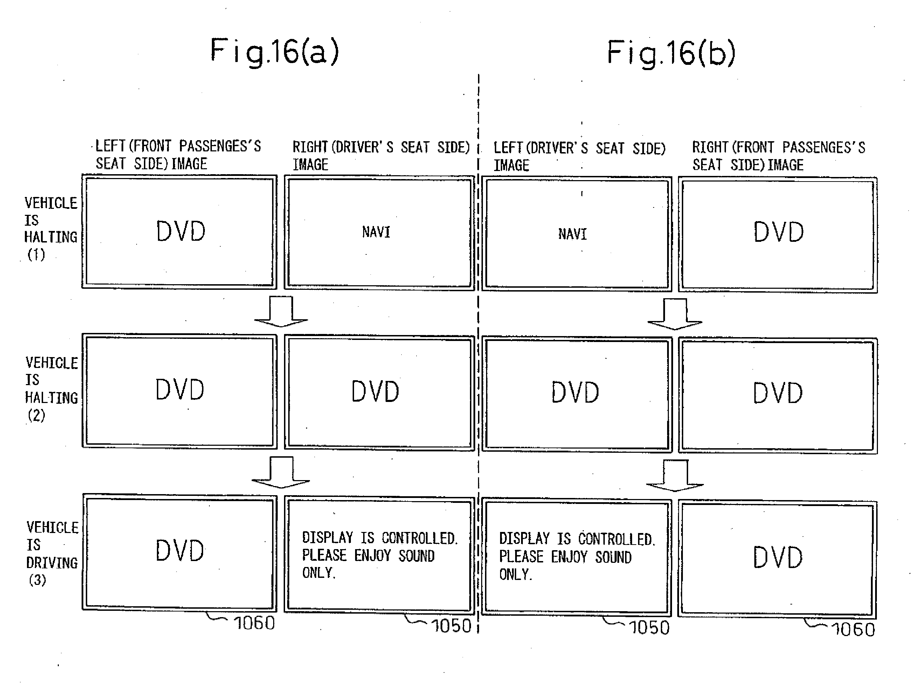

Fig. 15 and 16 illustrate examples of shifts of the screen when being controlled while driving. In Figs. 15 and 16, the diagrams (a) illustrate examples of shifts of the screen of when the driver's seat is on the right side of the car body (so-called right-hand steering wheeled vehicle) and the diagrams (b) illustrate examples of shifts of the screen of when the driver's seat is on the left side of the car body (so-called left-hand steering wheeled vehicle).

The example shown in Fig. 15 is a case where the vehicle that is halting has started driving and the images are controlled and where the screen is shifted to a display-allowable image (e.g., navigation image) that had been selected before the controlled image (e.g., DVD image). That is, while the vehicle is halting (1), a navigation image is displayed on the screen 1050 on the driver's seat side and a DVD image is displayed on the screen 1060 on the front passenger's seat side. Thereafter (while the vehicle is halting (2)), the driver may enjoy watching the images by having the DVD images displayed on the screen 1050. Here, if now the vehicle starts driving (vehicle is driving (3)) and the display device is controlled by driving, the DVD image which is the to-be-controlled image is automatically shifted to the navigation image which is a display-allowable image that had been selected before the screen 1050 on the driver's seat side had been controlled by driving. In this case, the image on the front passenger's seat side is not controlled by driving and remains to be the DVD image. In the diagrams (a) and (b), the driver's seat and the front passenger's seat are switched, and the right and left images are switched. However, the steps are the same shifting the screens being controlled by driving.

The example shown in Fig. 16 is a case of when being controlled by driving, the to-be-controlled image (e.g., DVD image) is inhibited from being displayed on the driver's seat side which is to be controlled by driving, and this fact is informed by inserted characters, images or the like on the still screen. That is, if the vehicle starts driving in a state where the DVD image is being displayed on the screen on the driver's seat side since the vehicle is halting (2), the DVD image is forcibly interrupted from being displayed on the screen 1050 on the driver's seat side, and the screen is forcibly shifted to a still screen with inserted characters saying, for example, "THE DISPLAY IS CONTROLLED. PLEASE ENJOY SOUND ONLY". The front passenger's seat side, on the other hand, is not controlled by driving, and the DVD image which is the to-be-controlled image is continuously displayed. When the vehicle is driving, therefore, the display of the to-be-controlled image is automatically discontinued on the driver's seat side, and the driver is allowed to dedicate himself to the safety driving while the passenger on the front passenger's seat side is allowed to freely enjoy watching the images.

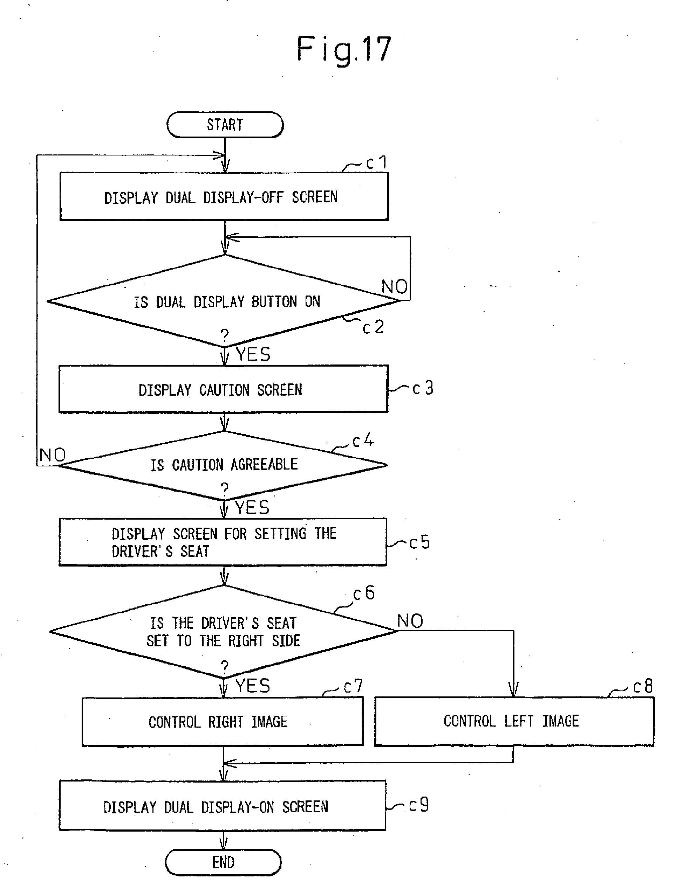

Fig. 17 is a diagram illustrating another embodiment of the present invention and is a flowchart for changing the object that is to be controlled by driving. That is, the flowchart is for suitably inputting the mounting place data (driver's seat data) depending upon whether the vehicle on which the display device is mounted has the steering wheel on the right side or on the left side, for suitably setting the image to be controlled by driving, and for enabling the selection of images displayed on the two screens. This is the constitution which enables the user who has purchased the display device of the invention and is going to mount it on the vehicle by himself, to arbitrarily set the screen which is to be controlled by driving depending upon the position of the steering wheel of the vehicle owned by the user. Without this constitution, there occurs an inconvenience as described below. That is, if the user who owns a vehicle with the steering wheel on the left side purchases a display device which has been set to be controlled by driving and has been designed for use in general vehicles with the steering wheel on the right side, then when the dual display function is turned on, the screen on the right side (front passenger's seat side) is controlled though it does not really have to be controlled; i.e., the control by driving is not properly executed.

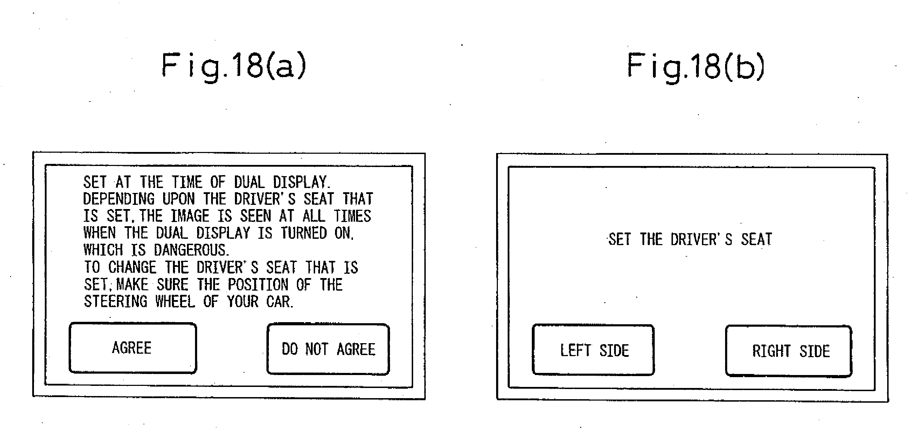

The constitution of the flowchart shown in Fig. 17 will now be described with reference to a screen for initial setting of Fig. 18. The condition for starting the initial setting is that the display device incorporated in the vehicle is connected to a battery and is turned on (ignition switch on). If this condition is satisfied and a subroutine for the initial setting starts, the display device at step c1 displays a screen in a mode which does not execute the dual display (dual display-off screen, such as displaying the same image on the right screen and on the left screen). At next step c2, it is judged if the user has operated to execute the duel display (e.g., the dual display button is depressed for longer than a predetermined period of time).

When YES at step c2, i.e., when a dual display button is turned on, a caution screen shown in Fig. 18(a) is displayed (step c3). The caution screen recommends the user to properly set the dual display depending upon the position of the driver's seat, i.e., depending upon whether the vehicle on which the display device is mounted has the steering wheel on the right side or on the left side. When the user agrees with the content displayed on the caution screen (a), therefore, a button "AGREE" on the screen is depressed. When the user does not agree with the displayed content, a button "DO NOT AGREE" is depressed.

At step c4, it is judged if the button "AGREE" is depressed on the caution screen (a) of Fig. 18. When YES at step c4, i.e., when the user has agreed to set the display screen in the dual display depending upon the position of the driver's seat in the vehicle, a screen for setting the driver's seat is displayed at step c5. Fig. 18(b) shows the screen for setting the driver's seat. At step c6, it is judged if the user has selected the driver's seat on the right side. When YES at step c6, i.e., when the user has depressed the button "RIGHT SIDE" in Fig. 18(b), the image to be controlled by driving is set to be the image on the right side at step c7. This control is executed by the driving accompanied by the shift of screens as shown in Fig. 15(a) or Fig. 16(a).

When NO is selected at step c6, i.e., when the user has depressed the button "LEFT SIDE" in Fig. 18(b), the image to be controlled by driving is set to be the image on the left side at step c8. This control is executed by the driving accompanied by the shift of screens as shown in Fig. 15(b) or Fig. 16(b). After the control is finished at step c7 or at step c8, the dual display-on screen is displayed at step c9 to end the processing. The dual display-on screen may be a still screen which lets the user know that the dual display can be separately selected, or may be a screen which promotes the user to select a desired display screen, or may be the one which is set to the navigation screen on the driver's seat side and is set to the DVD display screen on the front passenger's seat side.

When the dual display button has not been turned on at step c2, the routine does not proceed to the next step c3 until the duel display button is turned on. Further, when the user, at step c4, has depressed the button "DO NOT AGREE" in Fig. 18(a) (NO at step c4), the routine returns back to step c1 to display a.dual display-off screen. The dual display-off screen may be a still screen that lets the user know that the dual display cannot be separately set.

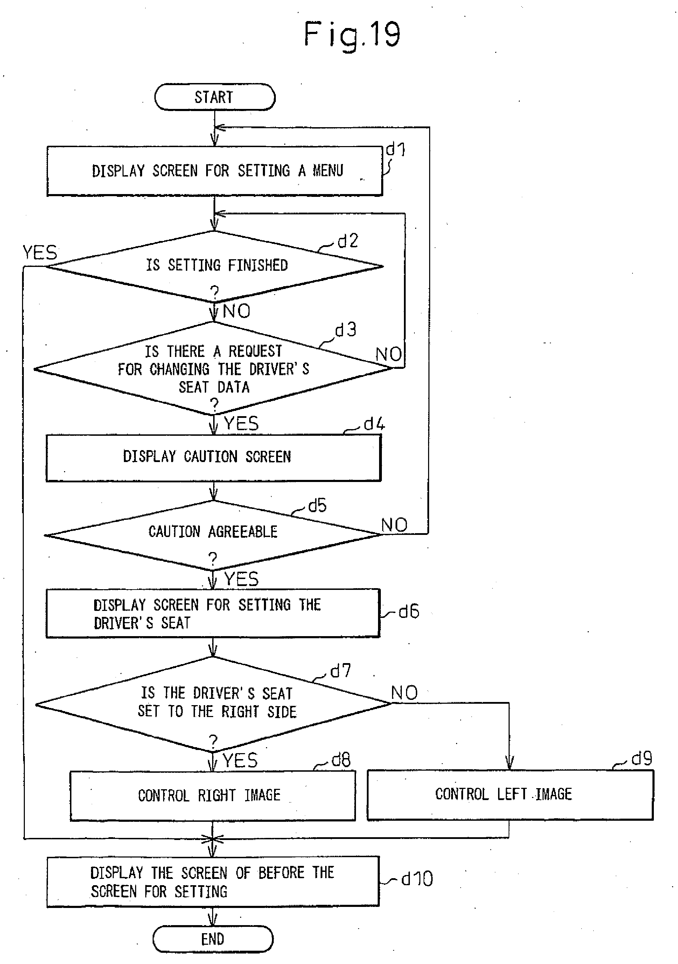

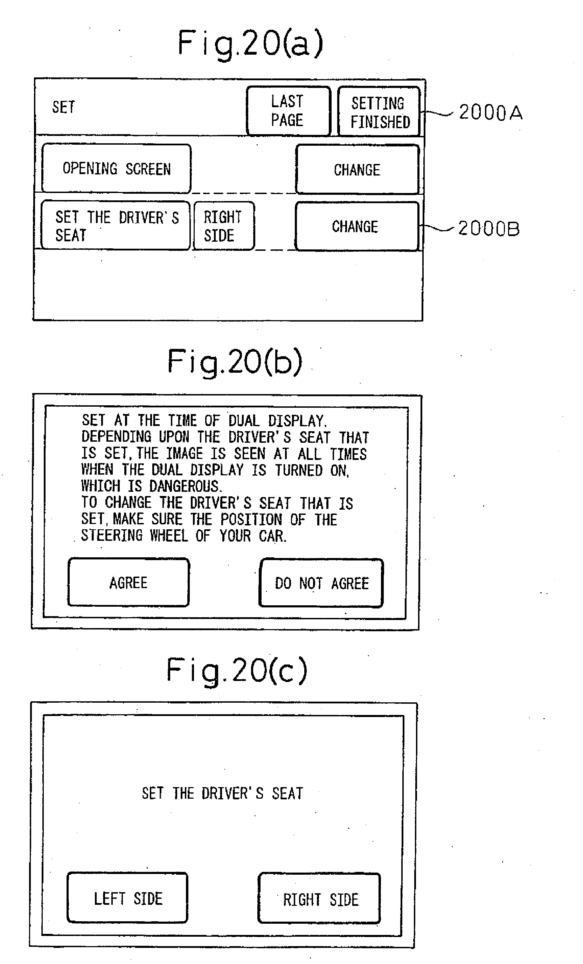

Described below next with reference to Figs. 19 and 20 are the operations for changing driver's seat data that has been set. When the driver's seat data has already been initially set by connecting the display device to the battery (see Figs. 17 and 18), there is almost always a need to change the driver's seat data that has been set. However, the display device has been furnished with a function for changing the setting of the driver's seat so as to be capable of coping with a case of when the driver's seat data is incorrectly input at the time of initial setting (e.g., the data is incorrectly set presuming that the vehicle has the steering wheel on the right side though the position of the steering wheel was actually on the left side).

In the flowchart of Fig. 19, the condition for starting the processing (start condition) is to call a setting screen on the menu screen of the display device. At step d1, if the menu screen (not shown) is operated to call the setting screen, a setting screen is displayed as shown in, for example, Fig. 20(a). The illustrated embodiment is capable of setting, through the setting screen (a), an opening screen that is automatically displayed when the display device is turned on, and of changing the driver's seat data that has been set. On the setting screen of Fig. 20(a), the user sets a desired opening screen and/or finishes the operation for changing the setting of the driver' seat data and, thereafter, turns the setting completion button 2000A on. Therefore, the setting is input to the display device. On the screen (a) of Fig. 20, the driver's seat which is on the right side of the vehicle is set being displayed by a default.

In the flowchart of Fig. 19, therefore, if the setting screen (a) of Fig. 20 is displayed at step d1, it is judged at next step d2 if a setting completion button 2000A is turned on. When NO is selected at step d2 (when the data have not been set yet), it is judged at step d3 if there is a request for changing the driver's seat data. The request for change is executed by turning on a change button 2000B on the setting screen (a) of Fig. 20. When YES is selected at step d3, a caution screen is displayed as shown in Fig. 20(b). At step d4, it is judged if the user is agreeing with the caution on the caution screen. When YES is selected, a screen for setting the driver's seat is displayed at step d6 as shown in Fig. 20(c).

At step d7, it is judged if the driver's seat data selected by the user according to the screen for setting the driver's seat is on the right side. When it is YES, the object image to be controlled by driving is set to be the right image at step d8. When NO, the object image to be controlled by driving is set to be the left image at step d9. When either control is finished, the screen of before the setting screen (a) is displayed on the display device at step d10, and the processing ends. When YES at step d2, i.e., when the setting completion button 2000A has been depressed on the screen (a), the routine quickly proceeds to step d10 where the screen of before the setting screen is displayed to end the processing. When NO is selected at step d3, i.e., when there is no request for changing the driver's seat data, the routine of step d2 and onward is executed again. When NO at step d5, i.e., when the user does not agree with the caution, the operation of step d1 and onward is repeated.

Therefore, after the driver's seat data has once been initially set, it is allowed to easily correct the incorrectly set data afterward.

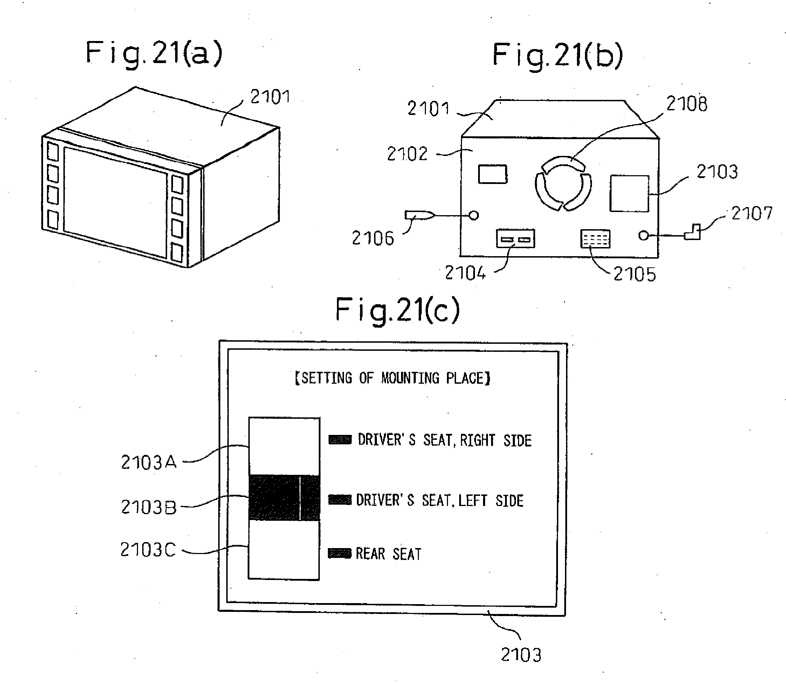

Fig. 21 is a view illustrating a further embodiment of the present invention, and deals with a case of setting the mounting position data of the display device inclusive of the driver's seat data by using a mechanical switch (e.g., dip switch). Fig. 21(a) is a front perspective view of the display device according to the invention, Fig. 21(b) is a perspective view of the back surface side thereof, and Fig. 21(c) is a view closely showing the dip switch provided on the back surface of the display device for setting the mounting place.

Referring to Fig. 21, the dip switch 2103 for setting the mounting position is provided on the back surface 2102 of the display device 2101. The dip switch 2103 has a switch 2103A for setting that the driver's seat is on the right side of the car body, a switch 2103B for setting that the driver's seat is on the left side of the car body, and a rear seat switch 2103C for setting that the display device 2101 is mounted on the rear seat of the vehicle. Upon selecting any one of the switches, the mounting place data of the display device are input to the display device.

In Fig. 21(b), reference numeral 2104 denotes a power source terminal, 2105 denotes a sound output terminal, 2106 denotes an AM/FM antenna connection terminal, and 2107 denotes an IP-BUS terminal. Reference numeral 2108 denotes a fan. These connection terminals are only some of the examples, and various terminals will be provided depending upon the specifications of the display device 2101, as a matter of course.

The mechanical switch 2103 shown in Fig. 21 for setting the mounting place data is desirably provided on the back surface 2102 of the display device 2101 where it can be operated by only a person who mounts the display device. This is because if the mechanical switch is provided at a place where it can be easily operated by the user, then it may happen that the user effects the setting different from the real setting place, e.g., effects the setting as if the vehicle has the steering wheel on the left side though the vehicle really has the steering wheel on the right side, and it is probable that the image for the driver's seat is reset without authorization from the state of being controlled while driving.

According to a still further embodiment of the present invention, the images are controlled while driving by automatically setting the installation place data inclusive of the driver's seat data. According to the display device of this embodiment, the table in which the data of the kind of the vehicle is corresponded to the driver's seat data is stored in advance in, for example, the memory 1005 shown in Fig. 10, while the data of the kind of the vehicle are automatically obtained through the car-mounted LAN (network connecting equipment mounted on the vehicle) or by the communication with an external unit (connection to the car dealer through an internet). By making reference to the table based on the data of the kind of the vehicle obtained by communication, it is allowed to automatically control the images while driving.

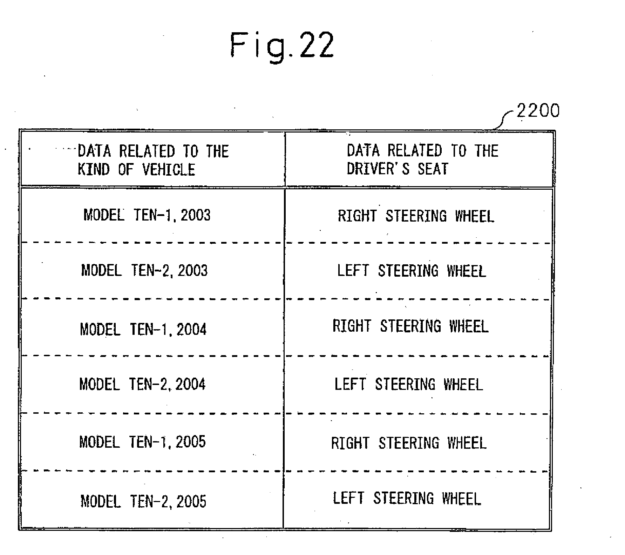

Fig. 22 illustrates a table 2200 relating the data of the kind of the vehicle to the driver's seat data. Referring to table 2200 as shown, the vehicle of a model TEN-1, 2003 has the steering wheel on the right side and, therefore, the right image is controlled while driving and the vehicle of a model TEN-2, 2005 has the steering wheel on the left side and, therefore, the left image is controlled while driving. Therefore, by incorporating the display device in the car body, connecting it to the battery and turning the power on, if the data of the kind of the vehicle can be automatically obtained through, for example, the car-mounted LAN, the CPU 1021 shown in Fig. 10 makes reference to the table 2200 and automatically executes the control while driving.

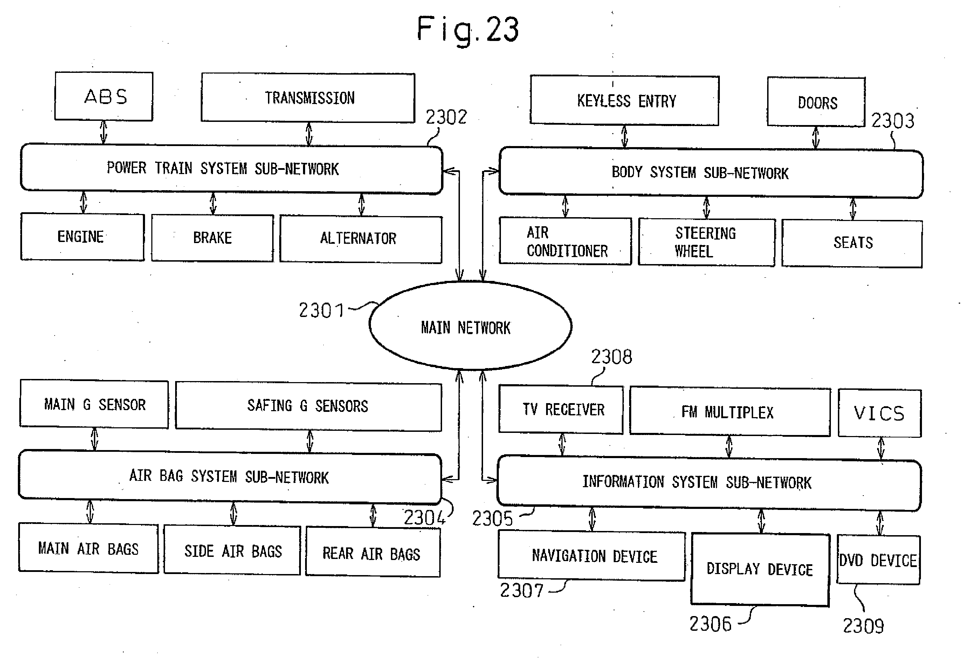

Fig. 23 is a diagram schematically illustrating the constitution of a car-mounted LAN. If a vehicle is electronically furnished, more kinds and numbers of electronic equipment and electronic control devices are mounted. To link them and to precisely control them, therefore, a car-mounted LAN has been developed and placed in practical use. As schematically shown in Fig. 23, the present car-mounted LAN is constituted by a main network 2301 and a plurality of sub-networks connected thereto. The sub-networks include a power train system sub-network 2302 to which are connected engine, brakes, ABS, transmission and a control unit (ECU) thereof, a body system sub-network 2303 to which are connected air conditioner, doors, seats, steering wheel, keyless entry system and control unit thereof, an air bag system sub-network 2304 to which are connected air bags, collision sensors and control unit thereof, and an information system sub-network 2305 to which are connected a navigation device, audio equipment and control units thereof. These sub-networks have communication rates adapted to the use and communication protocols.

The display device 2306 of the present invention is connected to the information system sub-network 2305 together with the navigation unit 2307, TV unit 2308 and DVD unit 2309. Usually, equipment connected to the information system sub-network 2305 have no data related to the kind of the vehicle. On the other hand, for example, the control unit for controlling the engine and such equipment as bakes connected to the power train system sub-network 2302 often has information related to the kind of the vehicle having above equipment mounted thereon. In such a case, the display device 2306 connected to the information system sub-network 2305 is allowed to obtain the data of the kind of the vehicle from equipment of the other sub-network via the main network 2301.

By making reference to the table of driver's seat data shown in Fig. 22 based on the data of the kind of the vehicle obtained through the car-mounted LAN, therefore, the display device 2306 is allowed to automatically obtain the driver's seat data of the automobile and to execute the control while driving based on the obtained data. According to this embodiment, therefore, the control can be automatically and properly executed from a moment when the display device is mounted on the vehicle without the need of waiting for setting the control operation by the user, manufacturer or car dealer. Therefore, there is no room for permitting incorrect control while driving or unauthorized deed against the control.

The image referred to in the present invention includes still pictures and dynamic pictures.
A. A display device comprising:
   a display unit capable of displaying separate images on the same screen in a plurality of viewing directions;
   a mounting place data-obtaining unit for obtaining data related to a place where said display unit is mounted; and
   a display control unit for controlling the display of an image in a particular viewing direction determined based on the data related to said mounting place.
B. The display device according to A, wherein when the data related to said mounting place are for a front seat of the vehicle, said display control unit controls the display of an image in the direction of the driver's seat.
C. The display device according to A, wherein when the data related to said mounting place are for a rear seat of the vehicle, said display control unit does not control the display of separate images in the plurality of viewing directions.
D. A display device comprising:
   a display unit capable of displaying separate images on the same screen in a plurality of viewing directions;
   a driving detector unit for detecting the driving of a vehicle; and
   a display control unit for controlling the display of an image in the direction of the driver's seat when the driving of the vehicle is detected by said driving detector unit.
E. The display device according to D, further comprising an image-judging unit for judging the content of an image displayed in the direction of the driver's seat, wherein, when the driving of the vehicle is detected by said driving detector unit, said display control unit changes from an image that is not allowed to be displayed in the direction of the driver's seat while the vehicle is being driven, to an image that is allowed to be displayed in the direction of the driver's seat while the vehicle is being driven depending upon the result judged by said image-judging unit.
F. The display device according to E, wherein the image that is prevented from being displayed in the direction of the driver's seat while the vehicle is being driven is at least a DVD image or a TV image.
G. The display device according to any one of D to F, further comprising an image selection unit capable of selecting an image to be displayed in the direction of the driver's seat out of the images that are allowed to be displayed in the direction of the driver's seat while the vehicle is being driven, wherein said display control unit displays an image selected by said image selection unit as an image to be displayed in the direction of the driver's seat.
H. The display device according to any one of D to F wherein, when the driving of the vehicle is detected by said driving detector unit, said display control unit displays an image for input operation in the direction of the front passenger's seat.
I. A display device comprising:
   a display unit capable of displaying separate images on the same screen in a plurality of viewing directions; and
   a to-be-controlled object-changing unit for changing the image that is to be controlled while driving depending upon the position of the driver's seat in the vehicle on which said display unit is mounted.
J. The display device according to I, further comprising:
   a driver's seat data-obtaining unit for obtaining the data related to the position of the driver's seat in the vehicle on which said display unit is mounted; and
   a display control unit which judges whether the driver's seat is on the right side or on the left side based upon the data obtained by said driver's seat data-obtaining unit, and controls the display of image in the direction of the driver's seat.
K. The display device according to I or J, wherein the image that is to be controlled while driving is at least a DVD image or a TV image.
L. The display device according to I or J, further comprising a table that is so constituted in advance that the data of the kind of the vehicle are related to the driver's seat data, wherein said driver's seat data-obtaining unit obtains the data of the kind of the vehicle through a car-mounted LAN or through the communication with an external unit, and obtains the driver's seat data by making reference to said table according to the obtained data of the kind of the vehicle.
M. The display device according to any one of A to C, further comprising a switch for mechanically setting the data related to a place where said display device is mounted.
N. The display device according to M, wherein said switch is provided on the back surface of a housing of said display device.

## Claims

1. A display device comprising:
a display unit capable of displaying separate images on the same screen in viewing directions of a driver's seat side and a front passenger's seat side;
a setting unit for setting information related to a position of a driver's seat of a vehicle in which said display unit is mounted; and
a control unit for allowing said display unit to display images based on the same video source in the viewing directions of the driver's seat side and the front passenger's seat side when said information related to said position of the driver's seat has not been set by said setting unit, said control unit configured to further allow said display unit to display images based on separate video sources in the viewing directions of the driver's seat side and the front passenger's seat side when said information related to said position of the driver's seat has been set by said setting unit.

2. The display device according to claim 1, further comprising a receiving unit for receiving a request to display images based on separate video sources in the viewing directions of a driver's seat side and a front passenger's seat side, wherein said setting unit is operable to request setting of said information related to said position of said driver's seat, if said receiving unit receives said request to display on said display unit said images based on separate video sources while said information related to said position of the driver's seat has not been set.

3. The display device according to claim 2, wherein, when said receiving unit receives said request to display on said display unit said images based on separate video sources while said information related to said position of the driver's seat has been set, navigation information is displayed at least in the viewing direction of the driver's seat side.

4. A display method of a display device having a display unit capable of displaying separate images on the same screen in viewing directions of a driver's seat side and a front passenger's seat side, comprising:
displaying images based on the same video source in the viewing directions of a driver's seat side and a front passenger's seat side when information related to a position of a driver's seat of a vehicle in which said display unit is mounted has not been set; and
displaying images based on separate video sources in the viewing directions of a driver's seat side and a front passenger's seat side when said information related to the position of a driver's seat has been set.

5. The display device comprising:
a display unit capable of displaying separate images on the same screen in viewing directions of a driver's seat side and a front passenger's seat side;
a judging unit for judging a driving condition of a vehicle; and
a control unit for restricting display of an input operation image in the viewing direction of a driver's seat side, if said input operation image has been displayed in the viewing direction of the driver's seat side and not displayed in the viewing direction of the front passenger's seat side, and if said judging unit judges that said vehicle is being driven;
wherein at least a part of said input operation image, which has been displayed in the viewing direction of a driver's seat side before said vehicle has been driven, is displayed in the viewing direction of the front passenger's seat side while the vehicle is being driven.

6. The display device according to claim 5, wherein said control unit is operable to control display of an image that is allowed to be displayed in the viewing direction of a driver's seat side while the vehicle is judged to be driven.

7. A display method of a display device capable of displaying separate images on the same screen in viewing directions of a driver's seat side and a front passenger's seat side, comprising:
restricting display of an input operation image which has been displayed in the viewing direction of a driver's seat side when the vehicle is judged to be driven in a condition where said input operation image has been displayed in the viewing direction of a driver's seat side and not displayed in the viewing direction of a front passenger's seat side; and
displaying at least a part of said input operation image, which was displayed in the viewing direction of a driver's seat side before said vehicle was being driven, in the viewing direction of a front passenger's seat side while the vehicle is being driven.
